# EUROPEAN PATENT APPLICATION

(11) **EP 1 826 468 A1**
(43) Date of publication of application: **29.08.2007**
(21) Application number: 04797380.5
(22) Date of filing: 24.11.2004
(51) Int. Cl.: F16L 9/16

(54) **SHAPED SPIRAL WOUND PIPE**

(71) Applicant: Chen, Yiqing, Jiangbei District Chongqing 400020 (CN)
(72) Inventor: CHAN, Kok, Peng, Singapore 288376 (SG); CHEN, Shi, Chongqing 400020 (CN); XU, Xinsu, Chongqing 400020 (CN); CHEN, Yiqing, Chongqing 400020 (CN)
(74) Representative: Howard, Paul Nicholas
(86) International application number: PCT/CN2004/001350
(87) International publication number: WO 2006/056101

(57) **Abstract**

The present invention relates to a shaped spiral wound pipe, which is multilayer formed by winding two kinds of shapes continuously, wherein Shape A have a T-shaped rib and a T -shaped notch at the edge thereof respectively, and have spaced grooves and ridges between the T -shaped rib and the T -shaped notch The adjacent T -shaped rib and T -shaped notch engage lockingly as the spiral wound pipe is shaped, and the grooves and ridges form spiral grooves and/or ridges. The shaped spiral wound pipe features that Shape B engage with the Shape A, wherein the Shape A is the base layer of the spiral wound pipe, and the Shape B make up of at least one overlapping reinforcing layer, and the overlapping reinforcing layer have spiral grooves and ridges so as to engage with Shape A or Shape B further. The Shape B have a ridge or a groove, or have a ridge and a groove on the upper and lower end thereof respectively , and the grooves or ridges engage lockingly with the spiral grooves or ridges formed by winding the Shape A.

## Description

### Technological Field

This invention relates to a large caliber shaped material spiral wound pipe.

### Background Art

Currently, cast iron pipes and cement pipes are used for delivery pipelines. However, production of these pipes requires large moulds and transportation of the pipes is very difficult. In addition, the pipes are weak in resisting acid or alkali corrosion. On the other hand, PVC pipes are good in resisting corrosion, but with currently available technologies, moulds are still used in production and therefore it is not possible to make large caliber pipes.

Chinese Patent ZL92200016.6 publishes the technology concerning wound plastic spiral shaped materials for the making of spiral formed pipes. Said shaped material has rib on one side and groove on the other side. During continuous spiral forming, the rib is closely fixed with the groove to form spiral pipes. However, this technology also has one problem, that is, such materials cannot be used to make large caliber pipes. It is because they have limited thickness and therefore not able to ensure sufficient intensity when used to make large pipes. If overlapped winding is adopted, desired intensity cannot be achieved because it is not possible to fix the layers.

Chinese Patent ZL001330209 publishes the technology concerning the making of pipes by winding plastic shaped materials. With the technology, large caliber pipes can be made by means of multi-layered winding. However, problem is that while winding, it is difficult to join the layers appropriately. The winding equipment has very complicated structure and produces large amount of odds and ends. Moreover, it is not possible to select amount of shaped materials and winding method according to calibers and intensities of the pipes.

### Summary of the Invention

The object of the invention is to provide a type of shaped material spiral wound pipes which allow the making of large caliber pipes with long service life on the spot and the selection of amount of shaped materials and winding method according to calibers and intensities of the pipes.

The above object can be achieved by such a technical solution, in which a shaped spiral wound pipe is formed in multilayer by winding two kinds of shapes continuously, wherein Shape A has a T-shaped rib and a T-shaped notch provided at the edge thereof, respectively, and spaced grooves and ridges are arranged between the T-shaped rib and the T-shaped notch, the adjacent T-shaped rib and T-shaped notch are engaged interlockingly as the spiral wound pipe is shaped, and said grooves and ridges form spiral grooves and/or ridges; characterized in that, the Shape A is taken as a base layer of the spiral wound pipe, Shape B is engages with said spiral grooves and/or ridges formed by the Shape A, the Shape B has a ridge or a groove, or has a groove and a ridge formed on the upper and lower ends thereof, respectively; said grooves or ridges of the Shape B engage interlockingly with the spiral grooves or ridges formed by winding the Shape A spirally so as to make up of at least one overlapped reinforcing layer, and the overlapped reinforcing layer has spiral grooves and ridges which can further engage with Shape A or Shape B.

If spiral pipe with larger caliber or high intensity is needed, the spiral ridge or groove on the overlapping reinforcing layer formed by winding Shape B can be further engaged with the ridges or grooves on Shape B to form additional one or more reinforcing layers. Said Shape B can be wound adjacently or at intervals on the spiral ridges or grooves.

### Brief Description of the Drawings

Above structure of the present invention can be further illustrated by the following figures. The following figures are provided:
Figure 1 illustrates the structure of the ridges on the upper and lower ends of Shape B;
Figure 2 illustrates the structure of Shape A;
Figure 3 illustrates the structure of spaced winding of Shape B;
Figure 4 illustrates the structure of implementation example 2;
Figure 5 illustrates the spiral wound pipe.
Legends of the figures:
1: T-shaped Rib 2: T-shaped Notch 3: Groove 4: Ridge

### Best Mode for Carrying out the Invention

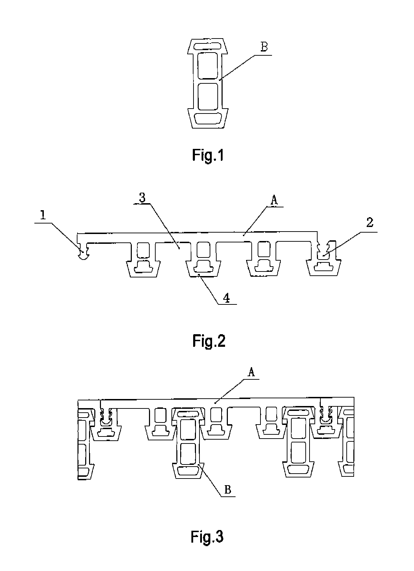

Refer to Figures 1 and 2 wherein Shape B has ridges on both upper and lower ends and Shape A has T-shaped Rib 1 and T-shaped notch 2 and has spaced grooves and ridges between the T-shaped rib and the T-shaped notch. The adjacent T-shaped rib and T-shaped notch engage interlockingly as the spiral wound pipe is shaped, and the grooves and ridges form spiral grooves and/or ridges on the base layer (Shape A) of the spiral wound pipe.

Refer to Figure 3 wherein spiral wound pipe is formed by winding one overlap reinforcing layer formed by Shape B on Shape A at intervals.

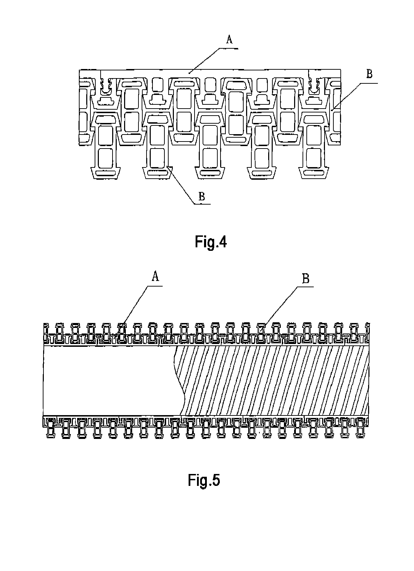

Refer to Figure 4 wherein spiral wound pipe is formed with a base layer made of Shape A and two overlap reinforcing layers made of Shape B of which the first layer is tightly wound and the second layer is wound at intervals.

In above examples, Ridges 4 of Shape A and Shape B made of PVC have locking notch. While making large caliber pipes, reinforcing ribs can be imbedded therein. Υ-shape Notch 2 can be dovetailed and T-shaped Rib 1 has dovetailed shape so as to engage with the notch.

The better example of this invention is as follows:
All adjacent Shape A and Shape B engage interlockingly and bonded firmly and all engaged groove 3 and ridge 4 bonded firmly when spiral wound pipe is shaped.

Thanks to its structure, the invention has the following advantages:
1. Shaped materials can be produced in factory and pipes can be fabricated on the spot, allowing saving of transport cost;
2. The pipes have light weight, which is only half that of cement pipes. Pipe wall roughness coefficient N=0.008-0.01.
3. The pipes have good performance in resisting acid, alkali, abrasion, and quaking. It is also highly resistant to displacement.
4. The pipe diameter and intensity can be adjusted flexibly according to actual requirements in a cost-effective manner.
5. Simple structure of the shaped materials requires simple processing and simplified facilities.

The present invention can be used to make large caliber delivery pipes which are particularly suitable in the fields of sewage discharge, water diversion, irrigation, building formwork, transportation, telecommunication cabling, etc.

## Claims

1. A shaped spiral wound pipe, which is formed in multilayer by winding two kinds of shapes continuously, wherein Shape (A) has a T-shaped rib and a T-shaped notch provided at the edge thereof, respectively, and spaced grooves and ridges are arranged between the T-shaped rib and the T-shaped notch, the adjacent T-shaped rib and T-shaped notch are engaged interlockingly as the spiral wound pipe is shaped, and said grooves and ridges form spiral grooves and/or ridges; **characterized in that**, the Shape (A) is taken as a base layer of the spiral wound pipe, Shape (B) is engages with said spiral grooves and/or ridges formed by the Shape (A), the Shape (B) has a ridge or a groove, or has a groove and a ridge formed on the upper and lower ends thereof, respectively; said grooves or ridges of the Shape (B) engage interlockingly with the spiral grooves or ridges formed by winding the Shape (A) spirally so as to make up of at least one overlapped reinforcing layer, and the overlapped reinforcing layer has spiral grooves and ridges which can further engage with Shape (A) or Shape (B).

2. The shaped spiral wound pipe as claimed in claim 1, wherein the spiral grooves or ridges formed on the overlapped reinforcing layer engage with the ridges or grooves on Shape B to form additional one or more overlapped reinforcing layers.

3. The shaped spiral wound pipe as claimed in claim 1, wherein the Shape B can be wound adjacently or at intervals on the spiral grooves or ridges.
